# EUROPÄISCHE PATENTSCHRIFT

(11) **EP 2 143 252 B1**
(45) Veröffentlichungstag und Bekanntmachung des Hinweises auf die Patenterteilung: **08.05.2013**
(21) Anmeldenummer: 08717308.4
(22) Anmeldetag: 03.03.2008
(51) Int. Cl.: H04L 29/06

(54) **VERFAHREN UND BASISSTATION ZUM EINRICHTEN EINES ACCOUNTS IN EINEM NETZWERK MIT VOIP- PROTOKOLL FÜR DECT- MOBILTEILE**
METHOD AND BASE STATION FOR CREATING AN ACCOUNT IN A NETWORK FEATURING A VOIP PROTOCOL FOR DECT MOBILE PARTS
PROCÉDÉ ET STATION DE BASE POUR ÉTABLIR UN COMPTE DANS UN RÉSEAU AVEC UN PROTOCOLE VOIP POUR DES PARTIES MOBILES DECT

(30) Priorität: 05.03.2007 DE 102007010582
(43) Veröffentlichungstag der Anmeldung: 13.01.2010
(73) Patentinhaber: Gigaset Communications GmbH, 81379 München (DE)
(72) Erfinder: KRUK, Anton, 46499 Hamminkeln (DE); LENFORT, Christoph, 46399 Bocholt (DE)
(74) Vertreter: Michalski Hüttermann & Partner Patentanwälte
(86) Internationale Anmeldenummer: PCT/EP2008/052542
(87) Internationale Veröffentlichungsnummer: WO 2008/107414

(56) Entgegenhaltungen:
- WO-A-98/57508
- "Digital cellular telecommunications system (Phase 2+); Universal Mobile Telecommunications System (UMTS); Numbering, addressing and identification (3GPP TS 23.003 version 6.11.0 Release 6); ETSI TS 123 003" ETSI STANDARDS, LIS, SOPHIA ANTIPOLIS CEDEX, FRANCE, Bd. 3-CN2;3-CN4, Nr. V6.11.0, 1. September 2006 (2006-09-01), Seiten 1-52, XP014035447 ISSN: 0000-0001
- "Digital Enhanced Cordless Telecommunications (DECT); DECT access to IP networks; ETSI TS 102 265" ETSI STANDARDS, LIS, SOPHIA ANTIPOLIS CEDEX, FRANCE, Bd. DECT, Nr. V1.2.1, 1. Oktober 2004 (2004-10-01), Seiten 1-66, XP014016275 ISSN: 0000-0001
- INFINEON: "Broadband - Voice over IP Solutions. VoIP solutions for SEAMLESS COMMUNICATION" INTERNET CITATION, [Online] 1. Januar 2006 (2006-01-01), Seiten 1-14, XP007901539 Gefunden im Internet: URL:http://www.ebv.com/media.php/EBV/Produ cts/Hot%20Adverts/IFX%20ADM5120/FINAL20041 22_VoIP_RZ05.pdf?dl=1> [gefunden am 2007-01-12]

## Beschreibung

In drahtlosen Mulitcell-Systemen, insbesondere in DECT- Multicell-Systemen wird die Identifikation zwischen DECT- Mobilteilen und DECT- Basisstation durch Vergabe von Zugangsrechten geregelt. Dabei verfügt gemäß dem ETSI- Standard 300 175 (Digital Enhanced Cordless Telecommunications) jede Basisstation über eine weltweit einzigartige Access Rights Identity (ARI). Jede Mobilstation identifiziert sich über einen Zugangsschlüssel, Portable Access Rights Key (PARK), im Zusammenhang mit einer internationalen Benutzer Identifikation, der International Portable User Identification (IPUI). Die Identifizierung einer Mobilstation hat den Zweck, nach einer für sie gültigen DECT-Basisstation zu suchen und die Mobilstation selbst im Netz eindeutig zu identifizieren. Die Mobilstation kann sich bei einer Basisstation nur dann anmelden, wenn deren ARI durch einen ihrer PARKs erkannt wird. Dazu dient der Portable Access Rights Key PARK und die International Portable User Identity IPUI. Eine Mobilstation sollte mindesten über einen PARK und eine IPUI verfügen. Diese Funktion ist auch für die das Roaming und Handover von Mobilteilen von Basisstation zu Basisstation erforderlich, da hierbei das roamende Mobilteil durch weitere Basisstationen identifiziert wird anschließend überprüft wird, ob sie an der jeweiligen Basisstation autorisiert ist.

Des Weiteren ist für die Anmeldung eines DECT- Mobilteils bei einer zugeordneten DECT- Basisstation ein DECT- standardgemäßer Authentisierungscode erforderlich um sich bei einer Anmeldung gegenüber der Basisstation eindeutig zu authentisieren - im Standard als Authentication Code beschrieben. Meist ist der Authentisierungscode voreingestellt und wird aus Sicherheitsgründen bei der Anmeldung geändert. Dieser Authentisierungscode stellt im Rahmen der Authentisierung der Mobilteile an einer Basisstation ein Passwort des DECT- Teilnehmers dar.

Seit geraumer Zeit sind DECT- Mobilteile für einen Anschluss an ein Intranet oder ein Internet vorgesehen, für die in den DECT- Basisstationen eine DECT/SIP- Konvertierung (SIP = Session Internet Protokoll) durchgeführt wird. Für Sprachverbindungen über Netzwerke mit Internetprotokoll - in der Fachwelt auch als Voice over IP (VoIP) bezeichneet - ist vorwiegend das SIP- Protokoll (Session Initiation Protocol) vorgesehen. Für ein Roaming bzw. Handover der DECT- Mobilteile ist in einem zugeordneten SIP- Server dem Heimatsystem ein SIP-Account zuzuordnen. Ein SIP- Account wird üblicherweise durch eine Benutzeridentifikation bzw. einen Benutzernamen und ein Passwort gebildet. Dies bedeutet, dass von einem DECT- Mobilteil ein SIP- Account einzugeben ist, um sich damit gegenüber jeder Basisstation des Systems eindeutig am SIP- Server identifizieren zu können.

Die Druckschrift WO 98/57508 A beschreibt ein auf dem Mobile-IP Standard basierendes Verfahren, mit dem ein für ein gegebenes DECT-Endgerät bestimmtes Telefonat an diejenige Basisstation weitergeleitet wird, an welche das besagte Endgerät gerade angemeldet ist

Die der Erfindung zugrunde liegende Aufgabe besteht darin, das Einrichten eines SIP- Accounts in DECT- Schnurlossystemen mit SIP- Konvertierung zu verbessern. Die Aufgabe wird durch die Merkmale des Anspruchs 1 und 6 gelöst.

Ein wesentlicher Aspekt des erfindungsgemäßen Verfahrens ist darin zu sehen, dass im Rahmen der Anmeldung des DECT- Mobilteils an der Basisstation in dieser die DECT- Benutzeridentifikation erfasst und nach einer Abbildungsvorschrift bzw. einer Format- und Protokollanpassung als SIP- Benutzeridentifikation für das Einrichten des Account verwendet wird. Für die Authentisierung zwischen DECT-Mobilteil und der Basisstation ist dem DECT-Mobilteil und der Basisstation ein Authentication Code AC als gemeinsames Geheimnis bekannt. Nach einer vorteilhaften Ausgestaltung des erfindungsgemäßen Verfahrens kann aus diesem Authentication Code AC auch ein SIP-Passwort abgeleitet werden.

Ein wesentlicher Vorteil der Erfindung ist darin zu sehen, dass die DECT- Mobilteile ohne zusätzliche weitere Entwicklungen für Basisstationen mit DECT-SIP- Protokoll-Konvertierung bzw. VoIP- Verbindungen weiterbenutzt werden können und somit eine besonders wirtschaftliche Realisierung von DECT-VoIP- Mobilteilen mit VoIP- Roaming möglich wird. Weiterhin können die Mobilteile für einen breiten Einsatzbereich vermarktet werden. Ein weiterer Vorteil besteht darin, dass nicht unterschiedliche Benutzeridentifikationen und Passwörter bzw. Authentisierungsinformationen gespeichert und verwaltet werden müssen.

Weitere vorteilhafte Weiterbildungen des erfindungsgemäßen Verfahrens und eine Ausgestaltung einer erfindungsgemäßen Basisstation sind den weiteren Ansprüchen zu entnehmen.

Im Folgenden werden die Erfindung und deren Weiterbildungen anhand zweier zeichnerischen Darstellungen erläutert. Dabei zeigen
- Figur 1: eine schematische Darstellung einer Kommunikationsanordnung mit den realisierten Schichten in den Komponenten und
- Figur 2: anhand eines Ablaufdiagramm das erfindungsgemäße Verfahren in der Kommunikationsanordnung.

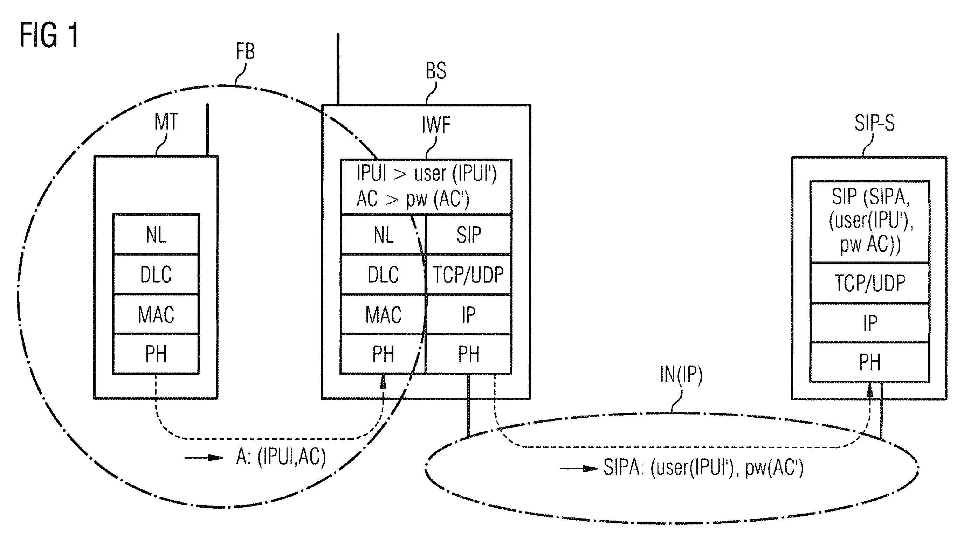

Figur 1 zeigt eine DECT- Basisstation BS, an die drahtlos gemäß dem DECT- Standart DECT- Mobilteile MT anschließbar sind. Für das Ausführungsbeispiel ist beispielhaft ein DECT-Mobilteil MT an die DECT- Basisstation BS drahtlos angeschlossen ist. Die zugehörige Funkzelle bzw. der Funkbereich FB ist in der Figur 1 durch einen strichpunktierten, mit FB bezeichneten Kreis angedeutet. Die Basisstation BS ist zusätzlich mit einem Kommunikationsnetz IN mit Internetprotokoll IP verbunden, wobei das Kommunikationsnetz durch ein Intranet oder das Internet IN repräsentiert sein kann. Im Ausführungsbeispiel sei das Kommunikationsnetz durch das Internet IN repräsentiert. Als Protokoll für VoIP- Verbindungen (Voice over Internet- Verbindungen) bzw. Sprachverbindungen über das Internet IN ist für das Ausführungsbeispiel das SIP- Protokoll (Session Internet Protokoll) vorgesehen. Das SIP- Protokoll SIP ist im Internet IN in einem SIP- Server SIPS realisiert - in der Figur 1 durch einen mit SIP bezeichnetes Rechteck angedeutet.

Das SIP- Protokoll wurde im Hinblick auf das Internet entwickelt und orientiert sich an der Architektur gängiger Internet- Anwendungen. Dabei stand leichte Implementierbarkeit, Skalierbarkeit, Erweiterbarkeit und Flexibilität im Vordergrund. Das SIP- Protokoll kann benutzt werden, um beliebige Sessions bzw. Kommunikationsbeziehungen mit einem oder mehreren Teilnehmern zu verwalten. Für das Roaming bzw. Handover von VoIP- Verbindungen wird im Internet IN ein SIP- Server SIPS eingerichtet, in dem für ein DECT- Mobilteil MT ein SIP-Account SIPA eingerichtet wird - in Figur 1 durch die Bezeichnung SIPA zur Bezeichnung SIP angedeutet. Ein SIP- Account SIPA ist üblicherweise durch eine SIP- Benutzeridentifikation - meist der Benutzername - und ein SIP- Passwort repräsentiert. Nach einem Einrichten eines SIP- Accounts SIPA wird im Rahmen eines Verbindungsaufbaus eines SIP-Endgeräts dessen Authentisierung überprüft.

Das DECT- Mobilteil MT kommuniziert mit der DECT- Basisstation BS gemäß dem nach ETSI Standard 300 175 realisierten DECT- Protokoll. Um eine VoIP Verbindung zwischen dem DECT-Mobilteil MT und dem Kommunikationsnetz IN, in dem das SIP-Protokoll SIP vorgesehen ist, zu ermöglichen, ist in der Basisstation BS eine DECT/SIP- Protokollkonvertierung implementiert.

Das DECT- Protokoll, SIP- Protokoll sowie die Protokollkonvertierung werden in Figur 1 durch eine Protokollschichtendarstellung erläutert, wobei die Erläuterung zu den Protokollschichten sowohl für das DECT- Mobilteil MT, die DECT-Basisstation BS und den SIP- Server SIPS zutrifft.

Basis ist in beiden Protokollschichten die physikalische Schicht PH. In der physikalischen Schicht PH des DECT- Protokolls sind die Funkschnittstelle und das Zugriffsverfahren vorgesehen. In der Zugriffsschicht bzw. Medium Access Control Schicht MAC wird der Funkkanal ausgewählt und werden die Steuerungsinformationen für den Auf-, Um- und Abbau des Funkkanals und die Synchronisationsinformationen übertragen. Auch werden die zu übertragenden Nutz- und Signalisierungsdaten dort verschlüsselt. In der Sicherungsschicht bzw. Data Link Control Schicht DLC werden die zu übermittelnden Informationen in Pakete gepackt. Diese werden ggfs um Prüfsummen und Steuerungsinformationen für den Datenfluss ergänzt. In der Netzwerkschicht bzw. im Network Layer NL wird der Informationsaustausch für den Verbindungsauf- und abbau bzw. die Signalisierung gesteuert. Analog hierzu ist in dem DECT-Mobilteil MT eine gleichartige Protokoll- Schichtenstruktur realisiert.

Die physikalischen Schicht PH bzw. die Netzwerkschicht des SIP- Protokolls SIP umfasst das Übertragungsmedium bzw. Netzwerk - beispielsweise Ethernet - sowie das verwendeten Zugriffsverfahren auf das Übertragungsmedium bzw. Netzwerk - beispielsweise CSMA. In der anschließenden Internetschicht wird das Internetprotokoll IP gemäß der verwendeten Standards IPv4 oder IPv6 realisiert. In der folgenden Transportschicht wird gemäß dem SIP- Standard für die Übertragung der Signalisierungsinformation ein Transmission Control Protocol TCP oder ein User Datagram Protocol UDP verwendet. Für die Übertragung der Sprachinformation wird in der Regel das User Datagram Protocol UDP verwendet. In der folgenden Schicht ist das SIP- Protokoll SIP realisiert und vorteilhaft gemäß dem IETF- Standard RFC 3261 ausgestaltet. Analog hierzu sind in dem SIP- Server die gleichartigen Schichten ausgebildet - siehe hierzu auch Figur 1.

In der Basisstation BS ist zwischen den beiden Protokollen eine Interworking- Funktion IWF angeordnet. Mit Hilfe dieser Interworking- Funktion IWF werden die Signalisierungsinformation und Nutzinformation aus dem DECT- Protokoll entnommen und an die Formate und Protokollinhalte angepasst. Nach der Format und Protokollanpassung werden die angepassten Signalisierungsinformationen in das SIP- Protokoll protokollgerecht eingefügt und umgekehrt.

Um eine eindeutige Authentisierung des Teilnehmers zu erreichen, wird eine International Portable User Identity IPUI - im Weiteren mit IPUI bezeichnet - benutzt. Diese ist einem zugelassenen Bereich - in einem oder mehreren Basisstationsbereichen, repräsentiert durch Portable Access Rights Keys (PARK), eindeutig definiert. Eine IPUI ist durch eine den Benutzertyp anzeigende und eine eine Benutzernummer anzeigende Information gebildet. Die Länge der Benutzernummer ist hierbei vom verwendeten Benutzertyp - beispielsweise ISDN, PBX - abhängig.

Für die eindeutige Authentisierung des DECT- Mobilteils MT gegenüber der Basisstation BS wird im Rahmen der Anmeldung bzw. Subskription des DECT- Mobilteils MT an der DECT- Basisstation BS ein DECT- standardgemäßer Authentisierungscode AC - im DECT- Standard 300 175 als Authentication Code beschrieben - eingegeben. Zwar ist für die Anmeldung der Authentisierungscode AC voreingestellt, wird jedoch aus Sicherheitsgründen geändert, d.h. neu eingegeben.

In beispielsweise aktuell aktivierten, d.h. aktuell eingeschalteten, oder 'roamenden', d.h. den Funkbereich wechselnden, DECT- Mobilteilen MT wird nach Empfang einer Radio Fixed Part Identity - Meldung die mit übermittelte Identifikation (PARK) mit einer gespeicherten Identifikation verglichen, wobei eine der gespeicherte Identifikation (PARK) anzeigt, dass das Kommunikationsendgerät auf den Bereich bzw. deren Basisstation zugreifen darf. Ist eine entsprechende Identifikation gespeichert, wird die zugehörige, dem DECT- Mobilteil MT eindeutig zugeordnete Identifikation (IPUI) in eine Location Registration - Meldung eingefügt und an die Basisstation BS bzw. den Bereich gesendet. Durch diese Location Registration - Meldung wird das betroffene DECT- Mobilteil MT in dem Bereich bzw. deren Basisstation BS angemeldet.

Für ein Roaming bzw. Handover der DECT- Mobilteile MT ist in dem zugeordneten SIP- Server SIPS dem Heimatsystem ein SIP-Account SIPA zuzuordnen. Ein SIP- Account SIPA wird üblicherweise durch eine Benutzeridentifikation user bzw. einen Benutzernamen und ein Passwort pw gebildet. Dies bedeutet, dass von einem DECT- Mobilteil ein SIP- Account SIPA einzubeben ist, um sich damit gegenüber dem SIP- Server SIPS eindeutig identifizieren zu können.

Erfindungsgemäß kann auf die Eingabe einer Benutzeridentifikation user und eines Passwortes pw verzichtet werden. Dies wird dadurch erreicht, dass der im Rahmen der Anmeldung - in der Figur durch die Bezeichnung A: angedeutet - übermittelten IPUI als Benutzeridentifikation user für das Einrichten eines SIP- Accounts SIPA gemäß einer Abbildungsvorschrift benutzt wird. Das SIP Passwort pw wird aus dem aus der DECT Authentisierung bekannten Authentisierungscode AC gebildet. Folglich wird in der Netzwerkschicht NL der DECT- Basisstation BS die IPUI und der Authentisierungscode AC erfasst und an die Interworkingfunktion IWP übermittelt. In dieser werden die beiden Informationen IPUI, AC gemäß einer Abbildungsvorschrift an die im SIP- Protokoll SIP verwendeten Formate angepasst und gemäß dem SIP- Protokoll als angepasste Benutzeridentifikation user(IPUI') und Passwort pw(AC') verwendet und an die SIP- Protokollschicht SIP übergeben. In dieser werden beiden gebildeten bzw. angepassten Informationen user(IPUI') und pw(AC) als SIP- Accountdaten für das Einrichten eines SIP- Accounts SIPA für das Mobilteil MT benutzt.

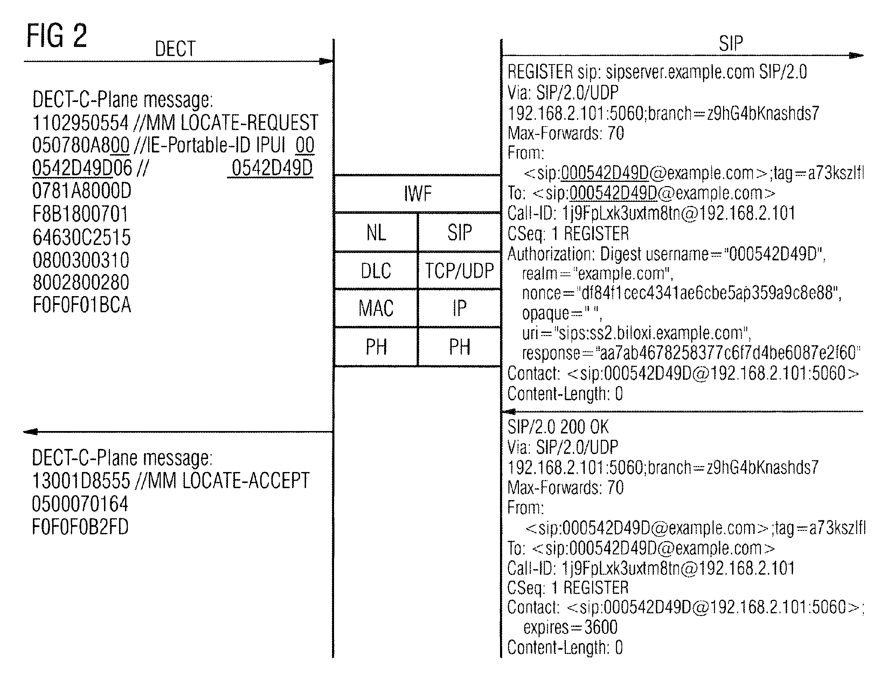

Figur 2 zeigt beispielhaft wie die Interworking- Funktion IWF eine einkommende MM-LOCATE-REQUEST Meldung aus dem DECT-Protokoll umsetzt in eine REGISTER Meldung für das SIP-Protokoll. Erfindungsgemäß wird die SIP-Benutzeridentifikation user hier durch eine Abbildungsfunktion gebildet aus der DECT Benutzeridentifikation IPUI, welche in diesem Beispiel "000542D49D" lautet. Diese Abbildungsfunktion ist in diesem Beispiel so gestaltet, dass die SIP Benutzeridentifikation user identisch ist zur DECT Benutzeridentifikation IPUI. Es wären aber auch andere Abbildungsvorschriften denkbar. Beispielhaft könnte die SIP Benutzeridentifikation user die oktale Darstellung der DECT Benutzeridentifikation IPUI sein. Im diesem Beispiel der DECT Benutzeridentifikation IPUI = "000542D49D" würde dann die SIP-Benutzeridentifikation user "520552235" lauten. Weitere Abbildungsvorschriften sind möglich, wobei aus der DECT- Benutzeridentifikation IPUI die SIP Benutzeridentifikation user direkt mit der Abbildungsvorschrift ohne bereits in der Basisstation BS vorrätig gespeicherte SIP- Benutzeridentifikationen gebildet wird.

Durch die erfindungsgemäße Anpassung der IPUI an die Benutzeridentifikation user(IPUI') und des Authentisierungscodes AC an das Passwort pw(AC') kann auf einfache Weise ein Roaming bzw. Handover von DECT- Mobilteilen MT in DECT-Systemen mit VoIP Anbindung realisiert werden, wobei die DECT- Mobilteile MT zum einen auch bei einer Anbindung an IPorientierte Netze unverändert weiterbenutzt werden können und zum anderen die DECT- Mobilteile MT für einen breiteren Einsatzbereich vermarktet werden können.

## Patentansprüche

1. Verfahren zum Einrichten eines Accounts in einem Netzwerk (IN) mit VoIP- Protokoll für ein DECT- Mobilteil (MT) einer DECT- Basisstation (BS) mit einer DECT/VoIP- Protokollkonvertierung für VoIP- Verbindungen,
**dadurch gekennzeichnet,**
**dass** eine VoIP- Benutzeridentifikation (user) gemäß einer Abbildungsvorschrift aus der DECT Benutzeridentifikation (IPUT) gebildet wird, ein VoIP Passwort (pw) aus einem DECT- Authenticationcode (AC) gebildet wird und beide für das Einrichten des als SIP-Account (SIPA) ausgebildeten Accounts verwendet werden.

2. Verfahren nach Anspruch 1, **dadurch gekennzeichnet,**
**dass** der gebildete SIP- Account (SIPA) im Netzwerk (IN) mit VoIP- Protokoll für das DECT- Mobilteil (MT) eingerichtet wird.

3. Verfahren nach Anspruch 2, **dadurch gekennzeichnet,**
**dass** der SIP- Account (SIPA) in einem SIP- Server (SIPS) im Netzwerk (IN) eingerichtet wird.

4. Verfahren nach einen der vorhergehenden Ansprüche, **dadurch gekennzeichnet,**
**dass** die DECT- Benutzeridentifikation (IPUI) und der Authenticationcode (AC) gemäß dem ETSI- Standard 300 175 gebildet sind.

5. Basisstation zum Einrichten eines Accounts in einem Netzwerk mit VoIP- Protokoll für ein DECT- Mobilteil (MT) an der Basisstation (BS) mit einer DECT/VoIP- Protokollkonvertierung für VoIP- Verbindungen,
**dadurch gekennzeichnet,**
**dass** eine Interworking- Funktion (IWF) zum Bilden einer VoIP- Benutzeridentifikation (user) aus einer DECT Benutzeridentifikation (IPUI) gemäß einer Abbildungsvorschrift vorgesehen ist und die Interworking- Funktion (IWF) zum Bilden eines VoIP Passworts (pw) aus einem DECT- Authenticationcode (AC) ausgestaltet ist und dass Mittel zum Einrichten des als SIP-Account (SIPA) ausgebildeten Accounts unter Verwendung der gebildeten VoIP- Benutzeridentifikation (user) und des VoIP Passworts (pw) vorgesehen sind.

6. Basisstation nach Anspruch 5, **dadurch gekennzeichnet,**
**dass** das VoIP- Protokoll als SIP- Protokoll (SIP) ausgestaltet ist, wobei der gebildete SIP-Account (SIPA) im Netzwerk mit VoIP- Protokoll eingerichtet wird.

7. Basisstation nach Anspruch 5 oder 6, **dadurch gekennzeichnet, dass** die die DECT- Benutzeridentifikation (IPUI) und der Authenticationcode (AC) gemäß dem ETSI- Standard 300 175 repräsentiert sind.

## Claims

1. Method for creating an account in a network (IN) with VoIP protocol for a DECT handset (MT) of a DECT base station (BS) including a DECT/VoIP protocol conversion for VoIP connections;
**characterized in that**
a VoIP user identification (user) is formed from the DECT user identification (IPUI) according to a mapping rule, a VoIP password (pw) is formed from a DECT authentication code (AC) and both are used for creating the account which is configured as SIP account (SIPA).

2. Method according to claim 1, **characterized in that**
the SIP account (SPA) is created for the DECT handset (MT) in the network (IN) with VoIP protocol.

3. Method according to claim 2, **characterized in that**
the SIP account (SIPA) is created at a SIP server (SIPS) in the network (IN).

4. Method according to any one of the preceding claims, **characterized in that**
the DECT user identification (IPUI) and the authentication code (AC) are formed according to the ETSI standard 300 175.

5. Base station for creating an account in a network with VoIP protocol for a DECT handset (MT) at the base station (BS) comprising a DECT/VoIP protocol conversion for VoIP connections,
**characterized in that**
an interworking function (IWF) for forming a VoIP user identification (user) from a DECT user identification (IPUI) according to a mapping rule is provided and the interworking function (IWF) is configured for forming a VoIP password (pw) from a DECT authentication code (AC) and means for creating the account configured as SIP account (SIPA) by use of the formed VoIP user identification (user) and the VoIP password (pw) are provided.

6. Base station according to claim 5, **characterized in that**
the VoIP protocol is configured as SIP protocol (SIP), wherein the SIP account (SIPA) is created in the network with VoIP protocol.

7. Base station according to claim 5 or 6, **characterized in that** the DECT user identification (IPUI) and the authentication code (AC) are represented according to the ETSI standard 300 175.

## Revendications

1. Procédé d'établissement d'un compte dans un réseau (IN) avec protocole VoIP pour une partie mobile DECT (MT) d'une station de base DECT (BS) avec une conversion de protocole DECT / VoIP pour des liaisons VoIP,
**caractérisé en ce qu'**une identification d'utilisateur VoIP (user) est formée à partir de l'identification d'utilisateur DECT (IPUI) selon une règle d'application, un mot de passe VoIP (pw) est formé à partir d'un code d'authentification DECT (AC) et **en ce que** les deux sont utilisés pour l'établissement du compte conçu en tant que compte SIP (SIPA).

2. Procédé selon la revendication 1, **caractérisé en ce que** le compte SIP formé (SIPA) est établi dans le réseau (IN) avec protocole VoIP pour la partie mobile DECT (MT).

3. Procédé selon la revendication 2, **caractérisé en ce que** le compte SIP (SIPA) est établi dans un serveur SIP (SIPS) dans le réseau (IN).

4. Procédé selon l'une des revendications précédentes, **caractérisé en ce que** l'identification d'utilisateur DECT (IPUI) et le code d'authentification (AC) sont formés selon la norme ETSI 300 175.

5. Station de base pour l'établissement d'un compte dans un réseau avec protocole VoIP pour une partie mobile DECT (MT) au niveau de la station de base (BS) avec une conversion de protocole DECT / VoIP pour des liaisons VoIP,
**caractérisée en ce qu'**une fonction d'interfonctionnement (IWF) est prévue pour former une identification d'utilisateur VoIP (user) à partir d'une identification d'utilisateur DECT (IPUI) selon une règle d'application, et la fonction d'interfonctionnement (IWF) est conçue pour former un mot de passe VoIP (pw) à partir d'un code d'authentification DECT (AC) et **en ce que** des moyens sont prévus pour établir le compte conçu en tant que compte SIP (SIPA) en utilisant l'identification d'utilisateur VoIP formée (user) et le mot de passe VoIP (pw).

6. Station de base selon la revendication 5, **caractérisée en ce que** le protocole VoIP est conçu en tant que protocole SIP (SIP), le compte SIP formé (SIPA) étant établi dans le réseau avec protocole VoIP.

7. Station de base selon la revendication 5 ou 6, **caractérisée en ce que** l'identification d'utilisateur DECT (IPUI) et le code d'authentification (AC) sont représentés selon la norme ETSI 300 175.
